# EUROPÄISCHE PATENTSCHRIFT

(11) **EP 3 604 795 B1**
(45) Veröffentlichungstag und Bekanntmachung des Hinweises auf die Patenterteilung: **28.09.2022**
(21) Anmeldenummer: 18187098.1
(22) Anmeldetag: 02.08.2018
(51) Int. Cl.: F03D 1/06, F03D 80/40

(54) **HEIZELEMENT UND WINDENERGIEANLAGENROTORBLATT**
HEATING ELEMENT AND WIND TURBINE ROTOR BLADE
ÉLÉMENT CHAUFFANT ET LAME DE ROTOR D'UNE ÉOLIENNE

(43) Veröffentlichungstag der Anmeldung: 05.02.2020
(73) Patentinhaber: Nordex Energy SE & Co. KG, 22419 Hamburg (DE)
(72) Erfinder: Lipka, Thomas, 18055 Rostock (DE)
(74) Vertreter: Epping - Hermann - Fischer

(56) Entgegenhaltungen:
- EP-A1- 2 754 891
- EP-A1- 3 109 466
- DE-A1-102016 117 916
- DE-U1-202013 007 659

## Beschreibung

Die Erfindung betrifft ein Heizelement für ein Windenergieanlagenrotorblatt einer Windenergieanlage. Die Erfindung betrifft auch ein Windenergieanlagenrotorblatt.

Windenergieanlagen werden verwendet, um Energie des Windes in elektrische Energie umzuwandeln. Dazu weisen sie herkömmlich ein Rotorblatt (Windenergieanlagenrotorblatt) oder mehrere Rotorblätter auf. Diese können bei entsprechenden Umweltbedingungen vereisen. Eine Vereisung der Rotorblätter kann beispielsweise zu einer Verschlechterung der aerodynamischen Eigenschaften führen oder andere negative Einflüsse auf den Betrieb der Windenergieanlage haben. Zudem kann es zu einem sogenannten Eisabwurf kommen, wobei sich Eis von einem Rotorblatt löst. Ein derartiger Eisabwurf kann Personen verletzen und ist insbesondere bei Windenergieanlagen in stadtnahen Gebieten problematisch.

Üblicherweise werden Rotorblätter mit ein oder mehreren Heizelementen versehen, die entlang der Außenhaut der Rotorblätter, insbesondere direkt unter der Oberfläche, angeordnet werden und einem Vereisen der Rotorblätter zumindest im Bereich der Profilnasenkante entgegenwirken sollen. Beispielhaft wird auf die EP 3 165 761 A1 und die EP 2 843 228 A1 verwiesen.

Die DE 10 2016 117 916 A1 offenbart eine Heizeinrichtung, die eine Schichtanordnung und eine Leiterstruktur aufweist, wobei die Schichtanordnung eine erste Schicht und wenigstens eine zweite Schicht umfasst, wobei die erste Schicht wenigstens ein erstes Partikelmaterial und eine erste Kunststoffmatrix umfasst, wobei das erste Partikelmaterial in der ersten Kunststoffmatrix eingebettet ist, wobei die zweite Schicht elektrisch leitend ausgebildet ist, wobei in der ersten Schicht ein Durchbruch angeordnet ist, wobei in der ersten Schicht eine Ausnehmung angeordnet ist, wobei der Durchbruch und die Ausnehmung miteinander verbunden sind, wobei ein Ausnehmungsgrund der Ausnehmung beabstandet zu der zweiten Schicht angeordnet ist, wobei in der Ausnehmung und dem Durchbruch die Leiterstruktur angeordnet ist, wobei die Leiterstruktur zumindest abschnittsweise elektrisch mit der zweiten Schicht verbunden ist.

Die EP 2 754 891 A1 offenbart eine Enteisungsanordnung für ein Windturbinenrotorblatt mit einer elektrisch leitenden Matte, mit einem elektrisch leitenden Streifen zum Verteilen von elektrischem Strom entlang eines ersten Rands der Matte, und mit einem Stromversorgungsanschluss zum Anschließen des Streifens an eine Stromversorgung. Ein weiteres Beispiel aus dem Stand der Technik ist in DE 20 2013 007659 U1 offenbart.

Es ist wünschenswert, ein Konzept für ein Heizelement sowie für ein Rotorblatt mit einem oder mehreren Heizelementen anzugeben, das zu einem besonders verlässlichen Betrieb des Rotorblatts beiträgt.

Gemäß einem ersten Aspekt wird ein Heizelement für ein Windenergieanlagenrotorblatt offenbart. Das Heizelement ist ausgebildet, einen Oberflächenbereich des Windenergieanlagenrotorblatts zu beheizen. Das Heizelement weist einen flächig ausgebildeten Träger auf, der mit zumindest einem Heizdraht versehen ist. Der Heizdraht weist einen ersten elektrischen Anschluss, der zum Anschluss an eine erste elektrische Versorgungsleitung des Windenergieanlagenrotorblatts ausgebildet ist, und einen zweiten elektrischen Anschluss auf, der zum Anschluss an eine zweite elektrische Versorgungsleitung des Windenergieanlagenrotorblatts ausgebildet ist. Das Heizelement ist dadurch gekennzeichnet, dass der Träger eine erste Aussparung aufweist, in welcher der erste elektrische Anschluss des Heizdrahtes freiliegt, insbesondere kontaktierbar mit einer Stromversorgungsleitung ist.

Typischerweise verlaufen saugseitig und druckseitig jeweils eine Stromversorgungsleitung von einem Bereich an der Blattwurzel zu einem Bereich an der Blattspitze des Rotorblatts. Das erfindungsgemäße Heizelement ermöglicht eine besonders effiziente Beheizung eines Rotorblatts. Mittels der Aussparung kann das Heizelement derart am Rotorblatt platziert werden, dass eine Stromversorgungsleitung durch das Heizelement, also den Träger, zumindest teilweise überlappt wird. Mittels der Aussparung und dem in dieser angeordneten elektrischen Anschluss kann die Stromversorgungsleitung elektrisch kontaktiert werden.

Das Heizelement ermöglicht es somit, insbesondere in Kombination mit weiteren solchen Heizelementen und Heizelementen ohne Aussparungen (d.h. die elektrischen Anschlüsse sind randseitig oder außerhalb des Trägers), den Heizbereich auf die gesamte Rotorblattoberfläche auszudehnen. Mit anderen Worten trägt das Heizelement dazu bei, dass auch Oberflächenbereiche abseits des Profilnasenkantenbereichs eines Rotorblatts aktiv beheizt werden können. Es ist somit möglich, auch die Rotorblattfahne, also den Profilendkantenbereich, und/oder den Blattwurzelbereich zu beheizen.

Ein weiterer Vorteil besteht darin, dass das Heizelement lokale Reparaturen zulässt, d.h. in einem betriebsgemäßen Zustand des Rotorblatts mit einem solchen Heizelement. Dies liegt insbesondere daran, dass die elektrischen Anschlüsse freiliegen bzw. im Wesentlichen frei zugänglich sind. Lokale Reparaturen beschädigter elektrischer Anschlüsse (auch Kontaktierungspunkte genannt) sowie beschädigter Heizelemente selbst sind standardmäßig möglich. Dies ist möglich, da das Heizelement (oder mehrere Heizelemente) sich auf der Außenseite der Blattschalen befinden und dünn überlaminiert werden. Sie befinden sich also auf der Oberfläche. Defekte Heizelemente können dadurch zudem leicht abgeschliffen werden.

Weiterhin ermöglicht das beschriebene Heizelement einen modularen Aufbau eines Heizsystems zusammen mit mehreren Heizelementen gleichartigen und/oder unterschiedlichen Heizelementen. Die Heizelemente werden je nach Rotorblatt und Verlauf der Versorgungsleitungen entsprechend zusammengesetzt. Dadurch können insbesondere große Rotorblätter - auch in Zukunft - besonders effizient beheizt werden. Es ist nicht nötig besonders große Heizelemente, etwa mit Flächen größer als 2m x 2m, zu verwenden. Derartig große Heizelemente sind unter anderem sehr schlecht zu reparieren. Zudem sind derartige Heizelemente aufgrund der Größe schwieriger anzubringen, insbesondere entsteht ein besonders hoher Aufwand der Kontaktierung der Stromversorgungsleitungen. Des Weiteren wird vermieden, dass Heizelemente, insbesondere große Heizelemente, um die Endkante eines Rotorblattes gewickelt werden müssen. Die Endkanten von Rotorblättern sind besonders dünn, so dass ein Herumführen von Heizdraht um die Endkante zu Schädigungen des Heizdrahts, beispielsweise zu einem Abknicken, führen würde. Die Endkante müsste dazu erhebliche Konturabweichungen durch den Laminataufbau ertragen, insbesondere spanend nachbearbeitet werden, was neben erhöhten Kosten auch ein Risiko für den darunterliegenden Heizdraht darstellen würde.

Weiterhin ermöglicht das beschriebene Heizelement eine einfache Befestigung am Blitzableiter sowohl auf der Druckseite als auch auf der Saugseite. Gerade größere Heizelemente, die dann über die Blitzableiter ragen würden, wären nicht oder nur unter erheblichem Aufwand kontaktierbar.

Weiterhin wird ermöglicht, dass eine Nachrüstung oder Ausrüstung von Rotorblättern mit Heizelementen sequenziell oder auf einmal durchgeführt wird.

Unter einem Heizelement kann auch ein flächiges Heizmodul verstanden werden. Der Träger ist ausgebildet oder geeignet auf die Oberfläche des Rotorblatts als Teil dessen auflaminiert zu werden. Der Träger ist beispielsweise aus textilem Material. Die elektrischen Anschlüsse des Heizelements liegen außerhalb des Trägers. Unter dem Heizdraht wird ein elektrisch leitendes Material verstanden, welches im Träger in Bahnen verlaufend angeordnet ist, beispielsweise mäanderförmig. Es kann sich um einen einzelnen metallischen Draht oder eine einzelne leitenden Leitungsfaser handeln. Es kann sich alternativ um mehrere Drähte oder mehrere Fasern aus einem elektrisch leitenden Material handeln, die zu einem Bündel zusammengefasst sind.

Gemäß einer Ausführungsform weist der Träger eine zweite Aussparung auf, in welcher der zweite elektrische Anschluss des Heizdrahts freiliegt. Dadurch wird neben den obigen Vorteilen und Funktionen auch ermöglicht, dass das Heizelement beide Versorgungsleitungen überlappen kann, wobei es um die Nasenkante herumgeführt ist.

Bevorzugt sind die eine oder beide Aussparungen beabstandet von einem Rand des Heizelements innerhalb dessen angeordnet. Mit anderen Worten sind die Aussparungen innerhalb der vom Träger überdeckten Fläche angeordnet. Mit wieder anderen Worten sind die Aussparungen von dem Träger umgeben.

Gemäß einem weiteren Aspekt wird ein Windenergieanlagenrotorblatt für eine Windenergieanlage offenbart. Dieses weist ein blattwurzelseitiges Ende und ein gegenüberliegendes blattspitzenseitiges Ende, eine Profilnasenkante, eine Profilendkante, eine Saugseite und eine Druckseite auf. Das Rotorblatt weist eine erste elektrische Versorgungsleitung, die sich zwischen der Profilnasenkante und der Profilendkante auf der Saugseite zwischen dem blattwurzelseitigen Ende und dem blattspitzenseitigen Ende erstreckt, auf. Das Rotorblatt weist eine zweite elektrische Versorgungsleitung, die sich zwischen der Profilnasenkante und der Profilendkante auf der Druckseite zwischen dem blattwurzelseitigen Ende und dem blattspitzenseitigen Ende erstreckt, auf. Das Rotorblatt weist ein zweites Heizelement nach einer der obigen Ausführungsformen auf, welches mit den beiden Versorgungsleitungen zur Versorgung mit Heizstrom gekoppelt ist.

Das Rotorblatt ermöglicht die oben genannten Vorteile und Funktionen.

Das Rotorblatt hat eine Längsachse, die von dem blattwurzelseitigen Ende zu dem blattspitzenseitigen Ende verläuft. Die Profilendkante und die Profilnasenkante verlaufen entlang der Längsachse. Die Druckseite bzw. Saugseite ist definiert als jeweils ein Bereich, der sich zwischen Profilendkante und die Profilnasenkante auf der Ober- bzw. Unterseite des Rotorblatts erstreckt. Typischerweise entsprechen die Saugseite und die Druckseite jeweils einer Rotorblatthalbschale. Beispielsweise ist das Rotorblatt in mehrere Bereiche unterteilt, etwa den ersten Bereich und weitere drei Bereiche. Der erste Bereich kann auch "Bereich Spitze", der zweite Bereich "Bereich Mitte Spitze", der dritte Bereich "Bereich Mitte Blattwurzel" und der vierte Bereich "Bereich Blattwurzel" bezeichnet werden. Vom ersten bis zum vierten Bereich vergrößert sich ein Umfang des Rotorblatts zumindest abschnittsweise und damit eine maximal zu beheizende Fläche. Die Bereiche werden unten näher erläutert im Zusammenhang mit darin angeordneten Heizelementen.

Gemäß einer Ausführungsform weist das Windenergieanlagenrotorblatt ein erstes Heizelement in einem ersten Bereich des Windenergieanlagenrotorblatts auf, der sich ausgehend von dem blattspitzenseitigen Ende in Richtung des blattwurzelseitigen Endes erstreckt. Das erste Heizelement erstreckt sich zwischen den beiden Versorgungsleitungen um die Profilnasenkante herum und ist mit diesen elektrisch zur Versorgung mit Heizstrom gekoppelt.

Das erste Heizelement ist ähnlich zu dem obigen Heizelement aufgebaut, wobei beispielsweise keine Aussparungen im Träger vorgesehen sind. Im ersten Bereich können auch mehrere solcher erster Heizelemente entlang der Längsachse angeordnet sein. Gemäß einer Ausführungsform weist das zweite Heizelement eine erste Aussparung und eine zweite Aussparung im Träger auf, in denen der erste elektrische Anschluss beziehungsweise der zweite elektrische Anschluss des Heizdrahts jeweils angeordnet ist, und wobei das zweite Heizelement derart ausgebildet und angeordnet ist, dass sich dieses um die Profilnasenkante erstreckt, auf der Saugseite die erste Versorgungsleitung und auf der Druckseite die zweite Versorgungsleitung überlappt, so dass die beiden Aussparungen für die Kontaktierung der elektrischen Anschlüsse im Bereich der Versorgungsleitungen angeordnet sind.

Das zweite Heizelement ist beispielsweise in einem zweiten Bereich des Windenergieanlagenrotorblatts angeordnet, welcher zwischen dem ersten Bereich und dem blattwurzelseitigen Ende angeordnet ist und sich in Richtung des blattwurzelseitigen Endes erstreckt.

Das zweite Heizelement trägt zu den genannten Vorteilen und Funktionen bei. Insbesondere kann der zweite Bereich des Rotorblatts effizient mit einem solchen Heizelement versehen sein. Es können auch mehrere zweite Heizelemente, etwa im zweiten Bereich, vorgesehen sein.

Gemäß einer Ausführungsform weist das Rotorblatt ein drittes Heizelement und ein viertes Heizelement auf. Das dritte Heizelement erstreckt sich zwischen den beiden Versorgungsleitungen um die Profilnasenkante und ist mit diesen elektrisch zur Versorgung mit Heizstrom gekoppelt. Das vierte Heizelement erstreckt sich auf der Saugseite oder der Druckseite zwischen der zugehörigen Versorgungsleitung und der Profilendkante und ist mit den beiden Versorgungsleitungen elektrisch zur Versorgung mit Heizstrom gekoppelt. Insbesondere sind das dritte und das vierte Heizelement im Wesentlichen (d.h. mit möglicherweise geringfügigen Abweichungen) entlang einer Bahn hintereinander am Rotorblatt angeordnet. Unter einer Bahn ist ein linienartiger Verlauf oder ein Linienzug zu verstehen, der um die Längsachse herum verläuft. Eine Bahn ist im Wesentlichen senkrecht zu der Längsachse des Rotorblatts ausgerichtet.

Es kann auch ein weiteres viertes Heizelement geben, so dass eines auf der Saugseite und eines auf der Druckseite entsprechend angeordnet ist. Es können entlang der Längsachse auch mehrere Einheiten von einem dritten und zwei vierten Heizelementen, d.h. mehrere Bahnen, vorgesehen sein.

Durch diese Kombination von dritten und vierten Heizelementen wird zu den obigen Vorteilen und Funktionen beigetragen. Insbesondere kann ein Bereich des Rotorblatts effizient mit Heizelementen bis zu der Profilendkante abgedeckt werden.

Gemäß einer Ausführungsform weist das vierte Heizelement einen Heizdraht auf, der einen ersten elektrischen Anschluss, der mit der zugehörigen Versorgungsleitung auf der Saugseite bzw. Druckseite elektrisch gekoppelt ist, und einen zweiten elektrischen Anschluss aufweist, der mit der jeweils anderen Versorgungsleitung elektrisch gekoppelt ist, wobei der Heizdraht für die Kontaktierung der jeweils anderen Versorgungsleitung um die Profilnasenkante herum geführt ist. Dadurch wird vermieden, dass Heizdraht um die Profilendkante zu der jeweils anderen Versorgungsleitung geführt ist. Dies würde zu den oben erkannten Nachteilen führen.

Gemäß einer Ausführungsform sind das dritte und das zumindest eine vierte Heizelement in dem dritten Bereich des Windenergieanlagenrotorblatts angeordnet, welcher zwischen dem ersten Bereich und dem blattwurzelseitigen Ende angeordnet ist und sich in Richtung des blattwurzelseitigen Endes erstreckt.

Gemäß einer Ausführungsform weist das Rotorblatt ein fünftes Heizelement und ein sechstes Heizelement auf, wobei sich das fünfte Heizelement zwischen den beiden Versorgungsleitungen um die Profilnasenkante erstreckt und mit diesen elektrisch zur Versorgung mit Heizstrom gekoppelt ist. Das sechste Heizelement ist gemäß einer oben beschrieben Ausführungsform mit einer Aussparung ausgebildet, in der der erste elektrische Anschluss des Heizdrahts des sechsten Heizelements angeordnet ist. Das sechste Heizelement ist derart ausgebildet und angeordnet, dass dieses auf der Saugseite oder der Druckseite zwischen der Profilendkante und der zugehörigen Versorgungsleitung angeordnet ist und zudem die zugehörige Versorgungsleitung in Richtung der Profilnasenkante derart überlappt, dass die Aussparung für die Kontaktierung des ersten elektrischen Anschlusses im Bereich der zugehörigen Versorgungsleitung angeordnet ist. Das sechste Heizelement ist mit beiden Versorgungsleitungen elektrisch zur Versorgung mit Heizstrom gekoppelt.

Diese beiden Heizelemente ermöglichen die oben genannten Vorteile und Funktionen bzw. tragen zu diesen bei.

Im Grunde gilt das bezüglich der dritten und vierten Heizelemente Gesagte analog. Ein fünftes und ein oder zwei sechste Heizelementen sind in einer Bahn verlaufend hintereinander um die Längsachse umlaufend angeordnet.

Gemäß einer Ausführungsform weist das sechste Heizelement einen Heizdraht auf, der den ersten elektrischen Anschluss, der mit der zugehörigen Versorgungsleitung auf der Saugseite bzw. Druckseite elektrisch gekoppelt ist, und einen zweiten elektrischen Anschluss aufweist, der mit der jeweils anderen Versorgungsleitung elektrisch gekoppelt ist, wobei der Heizdraht für die Kontaktierung der jeweils anderen Versorgungsleitung um die Profilnasenkante herum geführt ist. Es gilt das oben Gesagte analog.

Gemäß einer Ausführungsform sind das fünfte und sechste Heizelement in einem vierten Bereich des Windenergieanlagenrotorblatts, welcher zwischen dem ersten Bereich und dem blattwurzelseitigen Ende angeordnet ist und der sich ausgehend von dem blattwurzelseitigen Ende in Richtung des blattspitzenseitigen Endes erstreckt, angeordnet.

Weitere Vorteile, Merkmale und Weiterbildungen ergeben sich aus der nachfolgenden, in Verbindung mit den Figuren erläuterten Beschreibung eines Ausführungsbeispiels.

Gleiche, gleichartige oder gleichwirkende Elemente können in den Figuren mit den gleichen Bezugszeichen versehen sein.

In den Figuren zeigen:
Figur 1 eine schematische Darstellung einer Windenergieanlage gemäß einem Ausführungsbeispiel,
Figur 2 eine schematische Darstellung eines Rotorblatts der Windenergieanlage, und
Figur 3 eine schematische Darstellung des Rotorblatts mit mehreren Heizelementen gemäß einem Ausführungsbeispiel der Erfindung.

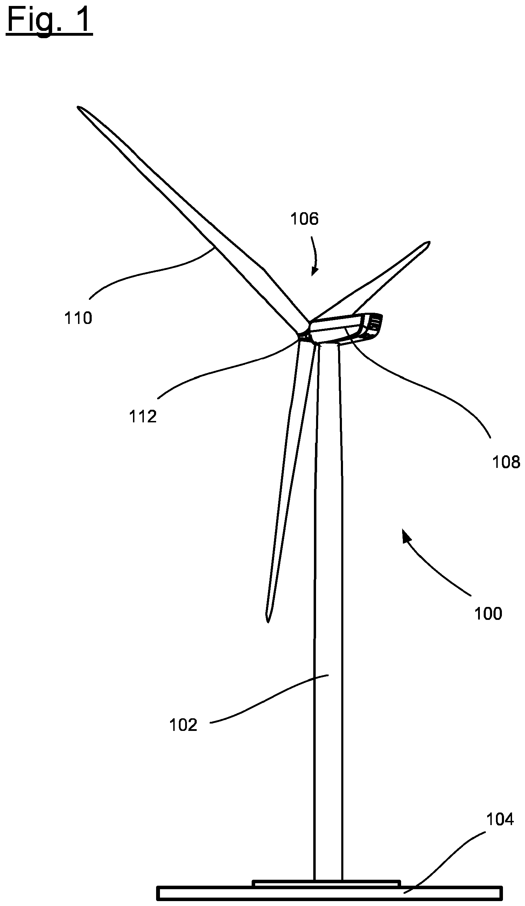

Figur 1 zeigt eine schematische Darstellung einer Windenergieanlage 100. Die Windenergieanlage 100 weist einen

Turm 102 auf. Der Turm 102 ist mittels eines Fundaments 104 auf einem Untergrund befestigt. An einem dem Untergrund gegenüberliegenden Ende des Turms 102 ist eine Gondel 106 drehbar gelagert. Die Gondel 106 weist beispielsweise einen Generator auf, der über eine Rotorwelle (nicht gezeigt) mit einem Rotor 108 gekoppelt ist. Der Rotor 108 weist ein oder mehrere (Windenergieanlagen)Rotorblätter 110 auf, die an einer Rotornabe 112 angeordnet sind.

Der Rotor 108 wird im Betrieb durch eine Luftströmung, beispielsweise Wind, in Rotation versetzt. Diese Rotationsbewegung wird über die Rotorwelle und gegebenenfalls ein Getriebe auf den Generator übertragen. Der Generator wandelt die kinetische Energie des Rotors 108 in elektrische Energie um.

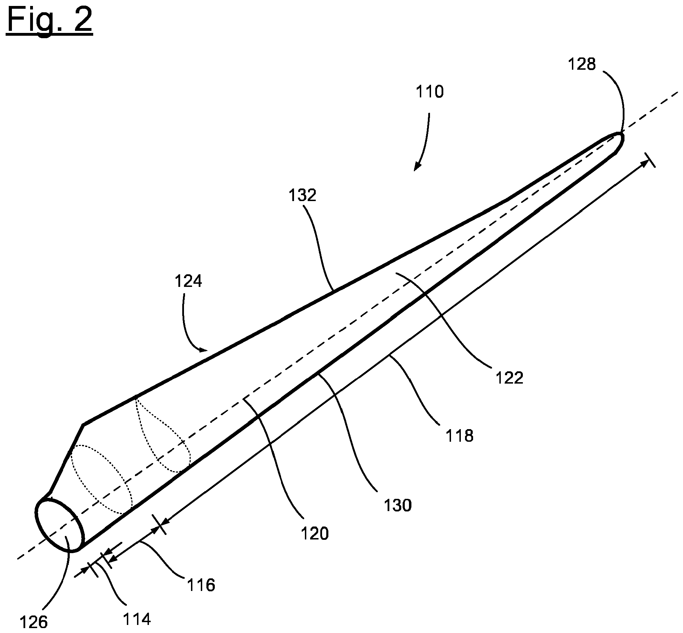

Figur 2 zeigt ein exemplarisches Windenergieanlagenrotorblatt 110. Das Rotorblatt 110 hat die Form eines herkömmlichen Rotorblattes und hat einen Rotorblattwurzelbereich 114, der der Rotornabe 112 zugewandt ist. Der Rotorblattwurzelbereich 114 hat typischerweise einen im Wesentlichen kreisrunden Querschnitt. An den Rotorblattwurzelbereich 114 schließen sich ein Übergangsbereich 116 und ein Profilbereich 118 des Rotorblatts 110 an. Das Rotorblatt 110 hat eine Längsachse 120 sowie eine Druckseite 122 und eine gegenüberliegende Saugseite 124. Das Rotorblatt 110 ist im Inneren im Wesentlichen hohl ausgebildet. Das Rotorblatt 110 hat ein blattwurzelseitiges Ende 126 und ein blattspitzenseitiges Ende 128. Das Rotorblatt 110 hat eine Profilnasenkante 130 und eine Profilendkante 132.

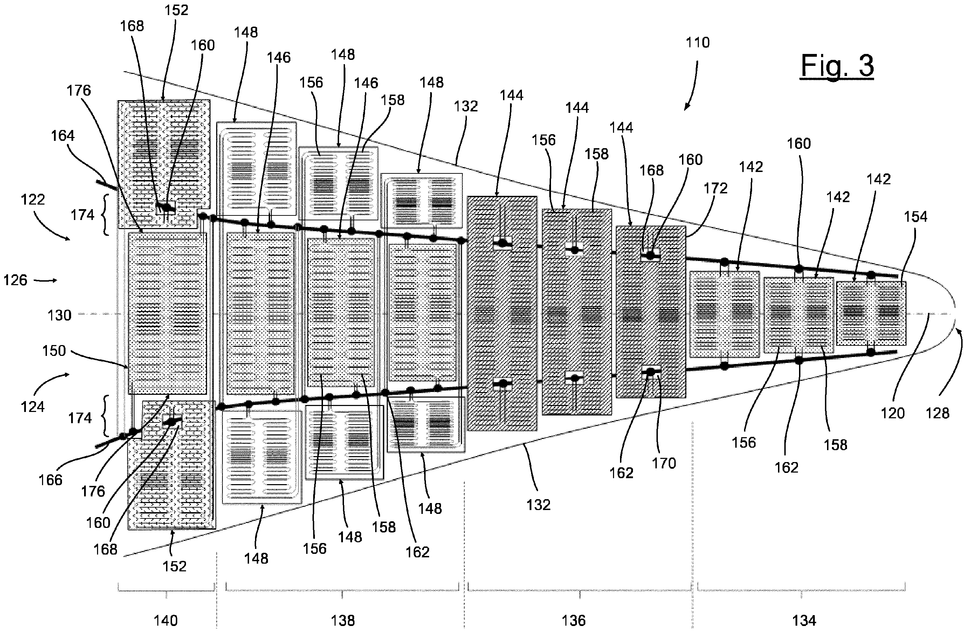

Figur 3 zeigt eine schematische Darstellung eines Rotorblattes 110 gemäß einem Ausführungsbeispiel der Erfindung. Figur 3 zeigt dabei eine abgerollte Mantelfläche eines Rotorblatts 110.

Das Rotorblatt 110 ist im Wesentlichen analog zu dem gezeigten Exemplar der Figuren 1 und 2 aufgebaut. Es hat ein blattwurzelseitiges Ende 126, ein blattspitzenseitiges Ende 128, eine Profilnasenkante 130 (fällt hier mit der Längsachse 120 zusammen), eine Profilendkante 132 (beidseitig aufgrund der abgerollten Mantelfläche), eine Druckseite 122 (obere Hälfte der Mantelfläche) und eine Saugseite 124 (untere Hälfte der Mantelfläche). Das Rotorblatt 110 ist grob in vier Bereiche 134, 136, 138 und 140 unterteilt, die entlang der Längsachse 120 vom blattspitzenseitigen Ende 128 bis zum blattwurzelseitigen Ende 126 angeordnet sind. Vom ersten Bereich 134 bis zum vierten Bereich 140 nimmt eine Mantelfläche des Rotorblatts 110 zu.

Um möglichst die gesamte Oberfläche (Mantelfläche) des Rotorblatts 110 bestmöglich und effizient beheizen zu können, sind mehrere und unterschiedliche Heizelemente vorgesehen, die entlang der Außenhülle, d.h. im Wesentlichen direkt auf der Oberfläche wie eingangs erwähnt, angeordnet sind und nachfolgend genauer beschrieben werden.

Jedes der im Folgenden beschriebenen Heizelemente 142, 144, 146, 148, 150 und 152 hat einen flächigen Träger 154, der beispielsweise aus textilem Material besteht. Jeder Träger 154 ist mit zwei Heizdrähten 156 und 158 versehen, die jeweils einen ersten elektrischen Anschluss 160 und einen zweiten elektrischen Anschluss 162 aufweisen. Im Beispiels fallen die ersten und zweiten Anschlüsse 160, 162 zusammen, können aber auch separat ausgebildet sein. Es sei an dieser Stelle darauf hingewiesen, dass in Figur 3 aus Gründen der Übersichtlichkeit nur einzelne Elemente mit Bezugszeichen versehen sind. Auf der Druckseite 122 (bzw. in der Druckseite 122) ist zwischen der Profilendkante 132 und der Profilnasenkante 130 eine erste Stromversorgungsleitung 164 angeordnet. Auf der Saugseite 124 (bzw. in der Saugseite 124) ist zwischen der Profilendkante 132 und der Profilnasenkante 130 eine zweite Stromversorgungsleitung 166 angeordnet. Sämtliche Heizelemente sind über die elektrischen Anschlüsse 160, 162 mit den Stromversorgungsleitungen 164, 166 elektrisch gekoppelt, so dass diese mit Heizstrom versorgt werden können. Die Heizelemente sind insbesondere als Widerstandsheizungen ausgebildet.

Im Folgenden werden die Heizelemente und deren Anordnung genauer beschrieben.

Im ersten Bereich 134 weist das Rotorblatt 110 drei erste Heizelemente 142 auf. Die ersten Heizelemente 142 erstrecken sich in Umfangsrichtung um die Profilnasenkante 130 zwischen den beiden Versorgungsleitungen 164, 166. Im ersten Bereich 134 ist zwischen den Versorgungsleitungen 164, 166 und den Profilendkanten 132 sowohl auf der Saugseite 124 als auch auf der Druckseite 122 aufgrund der Platzenge im Ausführungsbeispiel kein weiteres Heizelement vorgesehen. Dennoch ist der erste Bereich 134 des Rotorblattes 110 weitestgehend mit Heizelementen überdeckt, so dass eine großflächige Beheizung stattfinden kann.

Im zweiten Bereich 136 sind drei zweite Heizelemente 144 angeordnet. Diese zeichnen sich insbesondere dadurch aus, dass diese jeweils im Träger 154 eine erste Aussparung 168 und eine zweite Aussparung 170 aufweisen (nur an einem Heizelement 144 mit Bezugszeichen referenziert). Eine Aussparung kann auch als Durchbruch bezeichnet werden. Die Aussparungen 168, 170 befinden sich innerhalb des Heizelements 144, d.h. beabstandet von einem (gesamten, umlaufenden) Rand 172 des Heizelements 144 bzw. des Trägers 154. In der ersten Aussparung 168 ist der erste elektrische Anschluss 160 und in der zweiten Aussparung 170 ist der zweite elektrische Anschluss 162 angeordnet. Die zweiten Heizelemente 144 sind derart ausgebildet und angeordnet, dass sich diese um die Profilnasenkante 130 herum erstrecken und zudem auf der Druckseite 122 die erste Versorgungsleitung 164 und auf der Saugseite 124 die zweite Versorgungsleitung 166 überlappen, so dass die beiden Aussparungen 168, 170 für die Kontaktierung der elektrischen Anschlüsse 160, 162 im Bereich der Versorgungsleitungen 164, 166 angeordnet sind.

Mittels der zweiten Heizelemente 144 ist es möglich im zweiten Bereich 136 des Rotorblatts 110 auch die Bereiche auf Saugseite 124 und Druckseite 122 zu beheizen, die sich zwischen den Versorgungsleitungen 164, 166 und der Profilendkante 132 erstrecken.

Sowohl die ersten als auch zweiten Heizelemente 142, 144 erstrecken sich in einer Bahn umlaufend um die Profilnasenkante 130..

Im dritten Bereich 138 sind drei dritte Heizelemente 146 sowie jeweils dazugehörig zwei vierte Heizelemente 148 angeordnet. Ein drittes Heizelement 146 erstreckt sich jeweils zwischen den beiden Versorgungsleitungen 164, 166 um die Profilnasenkante 130 und ist mit diesen elektrisch zur Versorgung mit Heizstrom gekoppelt. Pro drittem Heizelement 146 sind zwei vierte Heizelemente 148 zwischen Profilendkante 132 und entsprechender Versorgungsleitung 164 auf Saugseite 124 bzw. Druckseite 122 angeordnet. Ein drittes und zwei vierte Heizelemente 146 bzw. 148 sind in einer Bahn angeordnet, die um die Längsachse 120 verläuft.

Jedes vierte Heizelement 148 hat erste und zweite Heizdrähte 156 und 158, wobei deren erster elektrischer Anschluss 160 direkt mit der jeweiligen Versorgungsleitung 164, 166 gekoppelt ist, während für die Kopplung des zweiten elektrischen Anschlusses 162 der Heizdraht jeweils um die Profilnasenkante 130 herum zur jeweils anderen Versorgungsleitung 164, 166 geführt ist.

Im vierten Bereich 140 sind analog zu dem dritten Bereich 138 ein fünftes Heizelement 150 und zwei sechste Heizelemente 152 angeordnet. Das fünfte Heizelement 150 erstreckt sich zwischen den beiden Versorgungsleitungen 164, 166 um die Profilnasenkante 130 und ist mit diesen elektrisch zur Versorgung mit Heizstrom gekoppelt. Dabei ragt das fünfte Heizelement 150, d.h. der Träger 154, nicht unmittelbar an die jeweiligen Versorgungsleitungen 164, 166 heran, so dass ein Bereich 174 zwischen den Versorgungsleitungen 164, 166 und den diesen zugewandten Randabschnitten 176 des Rands des Heizelements 150 ausgebildet ist, der frei von dem fünften Heizelement 150 ist. Jedes sechste Heizelement 152 zeichnet sich durch eine Aussparung 168 aus, in der der erste elektrische Anschluss 160 der Heizdrähte 156, 156 angeordnet ist. Jedes sechste Heizelement 152 ist derart ausgebildet und angeordnet, dass dieses auf der Saugseite 124 oder der Druckseite 122 zwischen der Profilendkante 132 und der zugehörigen Versorgungsleitung 164, 166 angeordnet ist und zudem die zugehörige Versorgungsleitung 164, 166 in Richtung der Profilnasenkante 130 derart überlappt, dass die Aussparung 168 für die Kontaktierung des ersten elektrischen Anschlusses 160 im Bereich der zugehörigen Versorgungsleitung 164, 166 angeordnet ist. Jedes sechste Heizelement 152 ist mit beiden Versorgungsleitungen 164, 166 elektrisch zur Versorgung mit Heizstrom gekoppelt. Analog zu den vierten Heizelementen 148 sind die sechsten Heizelemente 152 mit den Heizdrähten 156, 158 so kontaktiert, dass jeweils der Heizdraht 156, 158 für die Kontaktierung der zweiten elektrischen Anschlüsse 162 mit der jeweils anderen Versorgungsleitung 164, 166 um die Profilnasenkante 130 herum geführt ist.

Es sei darauf hingewiesen, dass die in den Figuren gezeigte rechteckige Form der Heizelemente nicht ausschlaggebend und daher auch variiert sein kann. Auch die Anzahl von Heizelementen pro Bereich bzw. die Anzahl von Bahnen aus zwei unterschiedlichen Heizelementen kann variiert sein. Wesentlich ist die Verwendung von Heizelementen mit einer oder mehreren Aussparungen für die Kontaktierung der elektrischen Anschlüsse. Dadurch kann, in Kombination mit Heizelementen ohne Aussparungen, wie in Figur 3 gezeigt, eine geschickte Anordnung von Heizelementen erreicht werden, so dass nahezu die gesamte Rotorblattaußenhülle beheizt werden kann. Es ist jedoch auch denkbar, Heizelemente wegzulassen oder einzelne Bereiche anders auszugestalten, so dass unter Umständen nicht die gesamte Fläche beheizbar ist, aber dennoch eine deutlich bessere Flächenausnutzung im Vergleich zu bekannten Rotorblättern und deren Heizsystemen erreicht wird.

### BEZUGSZEICHENLISTE

- 100: Windenergieanlage
- 102: Turm
- 104: Fundament
- 106: Gondel
- 108: Rotor
- 110: Rotorblatt, Windenergieanlagenrotorblatt
- 112: Rotornabe
- 114: Rotorblattwurzelbereich
- 116: Übergangsbereich
- 118: Profilbereich
- 120: Längsachse
- 122: Druckseite
- 124: Saugseite
- 126: blattwurzelseitiges Ende
- 128: blattspitzenseitiges Ende
- 130: Profilnasenkante
- 132: Profilendkante
- 134: erster Bereich
- 136: zweiter Bereich
- 138: dritter Bereich
- 140: vierter Bereich
- 142: erstes Heizelement
- 144: zweites Heizelement
- 146: drittes Heizelement
- 148: viertes Heizelement
- 150: fünftes Heizelement
- 152: sechstes Heizelement
- 154: Träger
- 156: erster Heizdraht
- 158: zweiter Heizdraht
- 160: erster elektrischer Anschluss
- 162: zweiter elektrischer Anschluss
- 164: erste Stromversorgungsleitung
- 166: zweite Stromversorgungsleitung
- 168: erste Aussparung
- 170: zweite Aussparung
- 172: Rand
- 174: Bereich
- 176: Randabschnitt

## Patentansprüche

1. Heizelement (144, 152) für ein Windenergieanlagenrotorblatt (110), wobei
- das Heizelement (144, 152) ausgebildet ist, einen Oberflächenbereich des Windenergieanlagenrotorblatts (110) zu beheizen,
- das Heizelement (144, 152) einen flächig ausgebildeten Träger (154) aufweist, der mit zumindest einem Heizdraht (156, 158) versehen ist,
- der Heizdraht (156, 158) einen ersten elektrischen Anschluss (160), der zum Anschluss an eine erste elektrische Versorgungsleitung (164) des Windenergieanlagenrotorblatts (110) ausgebildet ist, und einen zweiten elektrischen Anschluss (162) aufweist, der zum Anschluss an eine zweite elektrische Versorgungsleitung (166) des Windenergieanlagenrotorblatts (110) ausgebildet ist,
**dadurch gekennzeichnet, dass**
der Träger (154) eine erste Aussparung (168) aufweist, in welcher der erste elektrische Anschluss (160) des Heizdrahtes (156, 158) freiliegt.

2. Heizelement (144, 152) nach Anspruch 1, wobei der Träger (154) eine zweite Aussparung (170) aufweist, in welcher der zweite elektrische Anschluss (162) des Heizdrahts (156, 158) freiliegt.

3. Heizelement (144, 152) nach Anspruch 1 oder 2, wobei die erste Aussparung (168) und/oder die zweite Aussparung (170) beabstandet von einem Rand (172) des Heizelements (144, 152) innerhalb des Heizelements (144, 152) angeordnet ist.

4. Windenergieanlagenrotorblatt (110) für eine Windenergieanlage (100), aufweisend
- ein blattwurzelseitiges Ende (126) und ein gegenüberliegendes blattspitzenseitiges Ende (128), eine Profilnasenkante (130), eine Profilendkante (132), eine Saugseite (124) und eine Druckseite (122),
- eine erste elektrische Versorgungsleitung (164), die sich zwischen der Profilnasenkante (130) und der Profilendkante (132) auf der Saugseite (124) zwischen dem blattwurzelseitigen Ende (126) und dem blattspitzenseitigen Ende (128) erstreckt,
- eine zweite elektrische Versorgungsleitung, die sich zwischen der Profilnasenkante (130) und der Profilendkante (132) auf der Druckseite (122) zwischen dem blattwurzelseitigen Ende (126) und dem blattspitzenseitigen Ende (128) erstreckt, und
- ein zweites Heizelement (144, 152) nach einem der Ansprüche 1 bis 3, welches mit den beiden Versorgungsleitungen (164, 166) zur Versorgung mit Heizstrom gekoppelt ist.

5. Windenergieanlagenrotorblatt (110) nach Anspruch 4, aufweisend ein erstes Heizelement (142) in einem ersten Bereich (134) des Windenergieanlagenrotorblatts (110), der sich ausgehend von dem blattspitzenseitigen Ende (128) in Richtung des blattwurzelseitigen (126) Endes erstreckt, wobei sich das erste Heizelement (142) zwischen den beiden Versorgungsleitungen (164, 166) um die Profilnasenkante (130) erstreckt und mit diesen elektrisch zur Versorgung mit Heizstrom gekoppelt ist.

6. Windenergieanlagenrotorblatt (110) nach Anspruch 4 oder 5, wobei das zweite Heizelement (144, 152) eine erste Aussparung (168) und eine zweite Aussparung (170) aufweist, in denen der erste elektrische Anschluss (160) beziehungsweise der zweite elektrische Anschluss (162) des Heizdrahts (156, 158) jeweils angeordnet ist, und wobei das zweite Heizelement (144, 152) derart ausgebildet und angeordnet ist, dass sich dieses um die Profilnasenkante (130) erstreckt, auf der Druckseite (122) die erste Versorgungsleitung (164) und auf der Saugseite (124) die zweite Versorgungsleitung (166) überlappt, so dass die beiden Aussparungen (168, 170) für die Kontaktierung der elektrischen Anschlüsse (160, 162) im Bereich der Versorgungsleitungen (164, 166) angeordnet sind.

7. Windenergieanlagenrotorblatt (110) nach Anspruch 6, wobei das zweite Heizelement (144, 152) in einem zweiten Bereich (136) des Windenergieanlagenrotorblatts (110) angeordnet ist, welcher zwischen dem ersten Bereich (136) und dem blattwurzelseitigen Ende (126) angeordnet ist und sich in Richtung des blattwurzelseitigen Endes (126) erstreckt.

8. Windenergieanlagenrotorblatt (110) nach einem der Ansprüche 4 bis 7, aufweisend ein drittes Heizelement (146) und ein viertes Heizelement (148), wobei sich das dritte Heizelement (146) zwischen den beiden Versorgungsleitungen (164, 166) um die Profilnasenkante (130) erstreckt und mit diesen elektrisch zur Versorgung mit Heizstrom gekoppelt ist, und wobei sich das vierte Heizelement (148) auf der Saugseite (124) oder der Druckseite (122) zwischen der zugehörigen Versorgungsleitung (164, 166) und der Profilendkante (132) erstreckt und mit den beiden Versorgungsleitungen (164, 166) elektrisch zur Versorgung mit Heizstrom gekoppelt ist.

9. Windenergieanlagenrotorblatt (110) nach Anspruch 8, wobei das vierte Heizelement (148) einen Heizdraht (156, 158) aufweist, der einen ersten elektrischen Anschluss (160), der mit der zugehörigen Versorgungsleitung (164, 166) auf der Saugseite (124) bzw. Druckseite (122) elektrisch gekoppelt ist, und einen zweiten elektrischen Anschluss (162) aufweist, der mit der jeweils anderen Versorgungsleitung (164, 166) elektrisch gekoppelt ist, wobei der Heizdraht (156, 158) für die Kontaktierung der jeweils anderen Versorgungsleitung (164, 166) um die Profilnasenkante (130) herum geführt ist.

10. Windenergieanlagenrotorblatt (110) nach Anspruch 7 oder 8, wobei das dritte und vierte Heizelement (146, 148) in einem dritten Bereich (138) des Windenergieanlagenrotorblatts (110) angeordnet sind, welcher zwischen dem ersten Bereich (134) und dem blattwurzelseitigen Ende (126) angeordnet ist und sich in Richtung des blattwurzelseitigen Endes (126) erstreckt.

11. Windenergieanlagenrotorblatt (110) nach einem der Ansprüche 4 bis 10, aufweisend ein fünftes Heizelement (150) und ein sechstes Heizelement (152), wobei sich das fünfte Heizelement (150) zwischen den beiden Versorgungsleitungen (164, 166) um die Profilnasenkante (130) erstreckt und mit diesen elektrisch zur Versorgung mit Heizstrom gekoppelt ist, und wobei das sechste Heizelement (152) gemäß Anspruch 1 ausgebildet ist und eine Aussparung (168) aufweist, in der der erste elektrische Anschluss (160) des Heizdrahts (156, 158) des sechsten Heizelements (152) angeordnet ist, wobei das sechste Heizelement (152) derart ausgebildet und angeordnet ist, dass dieses auf der Saugseite (124) oder der Druckseite (122) zwischen der Profilendkante (132) und der zugehörigen Versorgungsleitung (164, 166) angeordnet ist und zudem die zugehörige Versorgungsleitung (164, 166) in Richtung der Profilnasenkante (130) derart überlappt, dass die Aussparung (168) für die Kontaktierung des ersten elektrischen Anschlusses (160) im Bereich der zugehörigen Versorgungsleitung (164, 166) angeordnet ist, wobei das sechste Heizelement (152) mit beiden Versorgungsleitungen (164, 166) elektrisch zur Versorgung mit Heizstrom gekoppelt ist.

12. Windenergieanlagenrotorblatt (110) nach Anspruch 11, wobei das sechste Heizelement (152) einen Heizdraht (156, 158) aufweist, der den ersten elektrischen Anschluss (160), der mit der zugehörigen Versorgungsleitung (164, 166) auf der Saugseite (124) bzw. Druckseite (122) elektrisch gekoppelt ist, und einen zweiten elektrischen Anschluss (162) aufweist, der mit der jeweils anderen Versorgungsleitung (164, 166) elektrisch gekoppelt ist, wobei der Heizdraht (156, 158) für die Kontaktierung der jeweils anderen Versorgungsleitung (164, 166) um die Profilnasenkante (130) herum geführt ist.

13. Windenergieanlagenrotorblatt (110) nach Anspruch 11 oder 12, wobei das fünfte und sechste Heizelement (150, 152) in einem vierten Bereich (140) des Windenergieanlagenrotorblatts (110), welcher zwischen dem ersten Bereich (134) und dem blattwurzelseitigen Ende (126) angeordnet ist und der sich ausgehend von dem blattwurzelseitigen Ende (126) in Richtung des blattspitzenseitigen Endes (128) erstreckt, angeordnet sind.

## Claims

1. A heating element (144, 152) for a wind turbine rotor blade (110), wherein
- the heating element (144, 152) is designed to heat a surface area of the wind turbine rotor blade (110),
- the heating element (144, 152) comprises a carrier (154) which has a planar design and is provided with at least one heating wire (156, 158),
- the heating wire (156, 158) comprises a first electrical terminal (160) designed for being connected to a first electrical supply line (164) of the wind turbine rotor blade (110), and a second electrical terminal (162) designed for being connected to a second electrical supply line (166) of the wind turbine rotor blade (110),
**characterized in that**
the carrier (154) comprises a first recess (168) in which the first electrical terminal (160) of the heating wire (156, 158) is exposed.

2. The heating element (144, 152) according to claim 1, wherein the carrier (154) comprises a second recess (170) in which the second electrical terminal (162) of the heating wire (156, 158) is exposed.

3. The heating element (144, 152) according to claim 1 or 2, wherein the first recess (168) and/or the second recess (170) is/are arranged within the heating element (144, 152) so as to be spaced from an edge (172) of the heating element (144, 152).

4. A wind turbine rotor blade (110) for a wind turbine (100), comprising
- a blade root side end (126) and an opposite blade tip side end (128), a profile leading edge (130), a profile trailing edge (132), a suction side (124) and a pressure side (122),
- a first electrical supply line (164) extending between the profile leading edge (130) and the profile trailing edge (132) on the suction side (124) between the blade root side end (126) and the blade tip side end (128),
- a second electrical supply line extending between the profile leading edge (130) and the profile trailing edge (132) on the pressure side (122) between the blade root side end (126) and the blade tip side end (128), and
- a second heating element (144, 152) according to any of the claims 1 to 3, which is coupled to the two supply lines (164, 166) for supplying a heating current.

5. The wind turbine rotor blade (110) according to claim 4, comprising a first heating element (142) in a first area (134) of the wind turbine rotor blade (110) extending from the blade tip side end (128) toward the blade root side end (126), wherein the first heating element (142) extends between the two supply lines (164, 166) around the profile leading edge (130) and is electrically coupled to these for supplying a heating current.

6. The wind turbine rotor blade (110) according to claim 4 or 5, wherein the second heating element (144, 152) comprises a first recess (168) and a second recess (170) in which the first electrical terminal (160) and the second electrical terminal (162) of the heating wire (156, 158) are arranged, respectively, and wherein the second heating element (144, 152) is designed and arranged in such a way that it extends around the profile leading edge (130), overlapping the first supply line (164) on the pressure side (122) and the second supply line (166) on the suction side (124), so that the two recesses (168, 170) for contacting the electrical terminals (160, 162) are arranged in the area of the supply lines (164, 166).

7. The wind turbine rotor blade (110) according to claim 6, wherein the second heating element (144, 152) is arranged in a second area (136) of the wind turbine rotor blade (110) which is arranged between the first area (136) and the blade root side end (126) and extends toward the blade root side end (126).

8. The wind turbine rotor blade (110) according to any of the claims 4 to 7, comprising a third heating element (146) and a fourth heating element (148), wherein the third heating element (146) extends between the two supply lines (164, 166) around the profile leading edge (130) and is electrically coupled to these for supplying a heating current, and wherein the fourth heating element (148) extends on the suction side (124) or on the pressure side (122) between the associated supply line (164, 166) and the profile trailing edge (132) and is electrically coupled to the two supply lines (164, 166) for supplying a heating current.

9. The wind turbine rotor blade (110) according to claim 8, wherein the fourth heating element (148) comprises a heating wire (156, 158) having a first electrical terminal (160) electrically coupled to the associated supply line (164, 166) on the suction side (124) and pressure side (122), respectively, and having a second electrical terminal (162) electrically coupled to the respective other supply line (164, 166), wherein the heating wire (156, 158) for contacting the respective other supply line (164, 166) is routed around the profile leading edge (130).

10. The wind turbine rotor blade (110) according to claim 7 or 8, wherein the third and fourth heating elements (146, 148) are arranged in a third area (138) of the wind turbine rotor blade (110), which is arranged between the first area (134) and the blade root side end (126) and extends toward the blade root side end (126).

11. The wind turbine rotor blade (110) according to any of the claims 4 to 10, comprising a fifth heating element (150) and a sixth heating element (152), wherein the fifth heating element (150) extends between the two supply lines (164, 166) around the profile leading edge (130) and is electrically coupled to these for supplying a heating current, and wherein the sixth heating element (152) is designed according to claim 1 and comprises a recess (168) in which the first electrical terminal (160) of the heating wire (156, 158) of the sixth heating element (152) is arranged, wherein the sixth heating element (152) is designed and arranged in such a way that the latter is arranged on the suction side (124) or the pressure side (122) between the profile trailing edge (132) and the associated supply line (164, 166) and also overlaps the associated supply line (164, 166) toward the profile leading edge (130) in such a way that the recess (168) for contacting the first electrical terminal (160) is arranged in the area of the associated supply line (164, 166), wherein the sixth heating element (152) is electrically coupled to both supply lines (164, 166) for supplying a heating current.

12. The wind turbine rotor blade (110) according to claim 11, wherein the sixth heating element (152) comprises a heating wire (156, 158) which comprises the first electrical terminal (160) electrically coupled to the associated supply line (164, 166) on the suction side (124) and pressure side (122), respectively, and a second electrical terminal (162) electrically coupled to the respective other supply line (164, 166), wherein the heating wire (156, 158) for contacting the respective other supply line (164, 166) is routed around the profile leading edge (130).

13. The wind turbine rotor blade (110) according to claim 11 or 12, wherein the fifth and sixth heating elements (150, 152) are arranged in a fourth area (140) of the wind turbine rotor blade (110), which is arranged between the first area (134) and the blade root side end (126) and extends from the blade root side end (126) toward the blade tip side end (128).

## Revendications

1. Élément chauffant (144, 152) pour une pale de rotor d'éolienne (110), sachant que
- l'élément chauffant (144, 152) est constitué pour chauffer une zone de surface de la pale de rotor d'éolienne (110),
- l'élément chauffant (144, 152) présente un support (154) constitué dans le plan, qui est pourvu d'au moins un fil chauffant (156, 158),
- le fil chauffant (156, 158) présente une première connexion électrique (160) qui est constituée pour la connexion à une première ligne d'alimentation électrique (164) de la pale de rotor d'éolienne (110), et une deuxième connexion électrique (162) qui est constituée pour la connexion à une deuxième ligne d'alimentation électrique (166) de la pale de rotor d'éolienne (110), **caractérisé en ce que**
le support (154) présente un premier évidement (168) dans lequel la première connexion électrique (160) du fil chauffant (156, 158) est exposée.

2. Élément chauffant (144, 152) selon la revendication 1, sachant que le support (154) présente un deuxième évidement (170) dans lequel la deuxième connexion électrique (162) du fil chauffant (156, 158) est exposée.

3. Élément chauffant (144, 152) selon la revendication 1 ou 2, sachant que le premier évidement (168) et/ou le deuxième évidement (170) est disposé à distance d'un bord (172) de l'élément chauffant (144, 152) à l'intérieur de l'élément chauffant (144, 152).

4. Pale de rotor d'éolienne (110) pour une éolienne (100), présentant
- une extrémité côté racine de pale (126) et une extrémité opposée côté pointe de pale (128), une arête de nez de profil (130), une arête d'extrémité de profil (132), un côté aspiration (124) et un côté refoulement (122),
- une première ligne d'alimentation électrique (164) qui s'étend entre l'arête de nez de profil (130) et l'arête d'extrémité de profil (132) côté aspiration (124) entre l'extrémité côté racine de pale (126) et l'extrémité côté pointe de pale (128),
- une deuxième ligne d'alimentation électrique qui s'étend entre l'arête de nez de profil (130) et l'arête d'extrémité de profil (132) côté refoulement (122) entre l'extrémité côté racine de pale (126) et l'extrémité côté pointe de pale (128), et
- un deuxième élément chauffant (144, 152) selon l'une des revendications 1 à 3, lequel est couplé aux deux lignes d'alimentation (164, 166) pour l'alimentation en courant de chauffage.

5. Pale de rotor d'éolienne (110) selon la revendication 4, présentant un premier élément chauffant (142) dans une première zone (134) de la pale de rotor d'éolienne (110) qui s'étend depuis l'extrémité côté pointe de pale (128) en direction de l'extrémité côté racine de pale (126), sachant que le premier élément chauffant (142) s'étend autour de l'arête de nez de profil (130) entre les deux lignes d'alimentation (164, 166) et est couplé électriquement à celles-ci pour l'alimentation en courant de chauffage.

6. Pale de rotor d'éolienne (110) selon la revendication 4 ou 5, sachant que le deuxième élément chauffant (144, 152) présente un premier évidement (168) et un deuxième évidement (170) dans lesquels la première connexion électrique (160) ou la deuxième connexion électrique (162) du fil chauffant (156, 158) est disposée respectivement, et sachant que le deuxième élément chauffant (144, 152) est constitué et disposé de telle manière que celui-ci s'étende autour de l'arête de nez de profil (130), chevauche la première ligne d'alimentation (164) côté refoulement (122) et la deuxième ligne d'alimentation (166) côté aspiration (124) de telle sorte que les deux évidements (168, 170) soient disposés dans la zone des lignes d'alimentation (164, 166) pour la mise en contact des connexions électriques (160, 162).

7. Pale de rotor d'éolienne (110) selon la revendication 6, sachant que le deuxième élément chauffant (144, 152) est disposé dans une deuxième zone (136) de la pale de rotor d'éolienne (110), laquelle est disposée entre la première zone (136) et l'extrémité côté racine de pale (126) et s'étend en direction de l'extrémité côté racine de pale (126) .

8. Pale de rotor d'éolienne (110) selon l'une des revendications 4 à 7, présentant un troisième élément chauffant (146) et un quatrième élément chauffant (148), sachant que le troisième élément chauffant (146) s'étend autour de l'arête de nez de profil (130) entre les deux lignes d'alimentation (164, 166) et est couplé électriquement à celles-ci pour l'alimentation en courant de chauffage, et sachant que le quatrième élément chauffant (148) s'étend côté aspiration (124) ou côté refoulement (122) entre la ligne d'alimentation (164, 166) associée et l'arête d'extrémité de profil (132) et est couplé électriquement aux deux lignes d'alimentation (164, 166) pour l'alimentation en courant de chauffage.

9. Pale de rotor d'éolienne (110) selon la revendication 8, sachant que le quatrième élément de chauffage (148) présente un fil chauffant (156, 158) qui présente une première connexion électrique (160) qui est couplée électriquement côté aspiration (124) ou côté refoulement (122) à la ligne d'alimentation (164, 166) associée, et une deuxième connexion électrique (162) qui est couplée électriquement à respectivement l'autre ligne d'alimentation (164, 166), sachant que le fil chauffant (156, 158) est mené autour de l'arête de nez de profil (130) pour la mise en contact de respectivement l'autre ligne d'alimentation (164, 166).

10. Pale de rotor d'éolienne (110) selon la revendication 7 ou 8, sachant que le troisième et le quatrième élément chauffant (146, 148) sont disposés dans une troisième zone (138) de la pale de rotor d'éolienne (110), laquelle est disposée entre la première zone (134) et l'extrémité côté racine de pale (126) et s'étend en direction de l'extrémité côté racine de pale (126).

11. Pale de rotor d'éolienne (110) selon l'une des revendications 4 à 10, présentant un cinquième élément chauffant (150) et un sixième élément chauffant (152), sachant que le cinquième élément chauffant (150) s'étend autour de l'arête de nez de profil (130) entre les deux lignes d'alimentation (164, 166) et est couplé électriquement à celles-ci pour l'alimentation en courant de chauffage, et sachant que le sixième élément chauffant (152) est constitué selon la revendication 1 et présente un évidement (168) dans lequel la première connexion électrique (160) du fil chauffant (156, 158) du sixième élément chauffant (152) est disposée, sachant que le sixième élément chauffant (152) est constitué et disposé de telle manière que celui-ci soit disposé côté aspiration (124) ou côté refoulement (122) entre l'arête d'extrémité de profil (132) et la ligne d'alimentation (164, 166) associée et chevauche en outre la ligne d'alimentation (164, 166) associée en direction de l'arête de nez de profil (130) de telle manière que l'évidement (168) soit disposé dans la zone de la ligne d'alimentation (164, 166) associée pour la mise en contact de la première connexion électrique (160), sachant que le sixième élément chauffant (152) est couplé électriquement aux deux lignes d'alimentation (164, 166) pour l'alimentation en courant de chauffage.

12. Pale de rotor d'éolienne (110) selon la revendication 11, sachant que le sixième élément chauffant (152) présente un fil chauffant (156, 158) qui présente la première connexion électrique (160) qui est couplée électriquement côté aspiration (124) ou côté refoulement (122) à la ligne d'alimentation (164, 166) associée, et une deuxième connexion électrique (162) qui est couplée électriquement à respectivement l'autre ligne d'alimentation (164, 166), sachant que le fil chauffant (156, 158) est mené autour de l'arête de nez de profil (130) pour la mise en contact de respectivement l'autre ligne d'alimentation (164, 166).

13. Pale de rotor d'éolienne (110) selon la revendication 11 ou 12, sachant que le cinquième et le sixième élément chauffant (150, 152) sont disposés dans une quatrième zone (140) de la pale de rotor d'éolienne (110), laquelle est disposée entre la première zone (134) et l'extrémité côté racine de pale (126) et s'étend depuis l'extrémité côté racine de pale (126) en direction de l'extrémité côté pointe de pale (128).
